# EUROPÄISCHE PATENTANMELDUNG

(11) **EP 1 174 794 A1**
(43) Veröffentlichungstag der Anmeldung: **23.01.2002**
(21) Anmeldenummer: 00810652.8
(22) Anmeldetag: 21.07.2000
(51) Int. Cl.: G06F 9/46

(54) **Verwaltung der Prozessorzeit, die einem von mehreren Programm-Tasks für dessen Ausführung auf einem Prozessor zugeteilt wird**

(71) Anmelder: ABB RESEARCH LTD., 8050 Zürich (CH)
(72) Erfinder: Frei, Alban, 5703 Seon (CH)
(74) Vertreter: ABB Patent Attorneys

(57) **Zusammenfassung**

Verfahren und Vorrichtung zur Verwaltung der Prozessorzeit, die jeweils einem von mehreren Programm-Tasks für dessen Ausführung auf einem Prozessor zugeteilt wird, wobei bei jedem Taktzyklus des Prozessors ein Zählerregister (1) inkrementiert wird, wobei jeweils bei einem Contextwechsel, anlässlich dessen eine erste Programmeinheit (Tx), die auf dem Prozessor ausgeführt wird, blockiert wird und die Prozessorzeit einer zweiten Programmeinheit (S) zugeteilt wird, der aktuelle Wert des Zählerregisters (1) als Zeitstempel ("TSₙ") gespeichert wird, wobei jeweils für einen Programm-Task (Tx), der bei einem Contextwechsel blockiert wird, aus dem Zeitstempel ("TSₙ₋₁") der Zuteilung der Prozessorzeit zu diesem Programm-Task (Tx) und aus dem Zeitstempel ("TSₙ") der Blockierung dieses Programm-Tasks (Tx), die von diesem Programm-Task (Tx) verwendete Prozessorzeit (tₓ) bestimmt wird, und wobei bei einem Contextwechsel überprüft wird, ob die verwendete Prozessorzeit eines Programm-Tasks, dem die Prozessorzeit zugeteilt werden soll, innerhalb eines diesem Programm-Task zugeordneten Prozessorzeit-Budgets liegt.

## Beschreibung

### Technisches Gebiet

Die vorliegende Erfindung betrifft ein Verfahren und eine Vorrichtung für die Verwaltung der Prozessorzeit, die jeweils einem von mehreren Programm-Tasks für dessen Ausführung auf einem Prozessor zugeteilt wird. Insbesondere (aber nicht ausschliesslich) betrifft die vorliegende Erfindung ein Verfahren und eine Vorrichtung für die Verwaltung der Prozessorzeit in Echtzeitsystemen und Echtzeitanwendungen.

### Stand der Technik

Als Echtzeitsysteme werden im Allgemeinen Computer- oder Prozessor-basierte Systeme bezeichnet, die nicht nur korrekte Rechen- und/oder Computerprogramm-Resultate liefern müssen, sondern die diese Resultate auch innerhalb einer garantierten, vordefinierten Zeitgrenze liefern müssen. Um das zu erreichen ist es nötig, dass die Echtzeitsysteme die verwendeten Systemresourcen, beispielsweise die Kommunikationsbandbreite oder den Speicherzugriff, so verwalten, dass die genannten Resultate garantiert zum rechten Zeitpunkt geliefert werden. Diese Aufgabe wird in der Regel durch spezielle Echtzeitbetriebssysteme (Realtime Operating Systems, RTOS) wahrgenommen.

Herkömmliche Echtzeitbetriebssysteme umfassen typischerweise prioritätsgesteuerte Scheduler-Programme (priority-driven scheduler), die jeweils demjenigen Programm-Task den Prozessor, respektive die Prozessorzeit, zuteilen, der die höchste Priorität im System aufweist. Sobald ein Programm-Task ausführbereit ist, der eine höhere Priorität aufweist als der Programm-Task, der momentan auf dem Prozessor ausgeführt wird, wird dieser momentan auf dem Prozessor laufende Programm-Task durch das Scheduler-Programm der herkömmlichen Echtzeitbetriebssysteme blockiert und dem Programm-Task mit der höheren Priorität der Prozessor, respektive die Prozessorzeit, zugeteilt.

Neue Entwicklungen auf dem Gebiet der Echtzeitsysteme und Echtzeitanwendungen erfordern, dass die Echtzeitbetriebssysteme die Verwendung der Prozessorzeit erfassen (siehe dazu: Zhong Deng et. al., *A Scheme for Scheduling Hard Real-Time Applications in the Open System Environment,* Proceedings of the 9^{th} Euromicro Workshop on Real-Time Systems, June 1997; und M. Spuri et. al., *Scheduling Aperiodic Tasks in Dynamic Priority Systems,* Real-Time Systems, Vol. 10, pp. 179-210, 1996). Insbesondere ist es erforderlich, die von den einzelnen Programm-Tasks jeweils verwendete Prozessorzeit zu erfassen, das heisst für jeden Programm-Task diejenige Zeit zu bestimmen und abzuspeichern, während welcher der Prozessor des betreffenden Systems dem betreffenden Programm-Task zugeteilt ist und der betreffende Programm-Task auf diesem Prozessor ausgeführt wird. In den oben erwähnten herkömmlichen, prioritätsgesteuerten Echtzeitbetriebssystemen wird die Verwendung der Prozessorzeit nicht erfasst. In den angeführten Neuentwicklungen auf dem Gebiet der Echtzeitsysteme und Echtzeitanwendungen werden Lösungen zur Erfassung der von Programm-Tasks verwendeten Prozessorzeit vorgeschlagen, die auf periodischen Timer-Interrupts basieren. Gemäss diesen bekannten Lösungen wird im Prinzip bei jedem periodischen Timer-Interrupt festgestellt, welcher Programm-Task zum Zeitpunkt des Timer-Interrupts auf dem Prozessor ausgeführt wird, das heisst, welchem Programm-Task die Prozessorzeit zum Zeitpunkt des Timer-Interrupts zugeteilt ist. Diese bekannten Lösungen ermöglichen die Erfassung der von Programm-Tasks verwendeten Prozessorzeit mit einer Auflösung im Bereich der Periodendauer des Timer-Interrupts. Da der Prozessor, respektive die Prozessorzeit, aus Effizienzgründen nicht zu stark mit der Bearbeitung von periodischen Timer-Interrupts belastet werden kann, kann nicht eine beliebig kurze Periodendauer der Timer-Interrupts gewählt werden, so dass die bekannten Lösungen nur eine ungenaue Erfassung der von Programm-Tasks verwendeten Prozessorzeit ermöglichen, beispielsweise eine Auflösung im Bereich von einer oder mehreren Millisekunden, da Contextwechsel von einem ersten Programm-Task auf einen zweiten Programm-Task auch innerhalb der Periodendauer der Timer-Interrupts vorgenommen werden können, beispielsweise eingeleitet durch einen Hardware-Interrupt. Da handelsübliche Prozessoren mit Taktperioden im Bereiche von wenigen Nanosekunden - oder sogar Bruchteilen von Nanosekunden - betrieben werden (beispielsweise 2 Nanosekunden bei einer Taktfrequenz von 500 MHz) wird eine Genauigkeit für die Erfassung der von Programm-Tasks verwendeten Prozessorzeit im Bereich von Millisekunden als zu ungenau erachtet, wenn man Verfälschungen durch die Contextwechsel in der Zeit zwischen zwei Timer-Interrupts bedenkt.

### Darstellung der Erfindung

Es ist eine Aufgabe der vorliegenden Erfindung, ein neues und besseres Verfahren sowie eine neue und bessere Vorrichtung zur Verwaltung der Prozessorzeit, die jeweils einem von mehreren Programm-Tasks für dessen Ausführung auf einem Prozessor zugeteilt wird, vorzuschlagen, welche insbesondere nicht den Nachteil des Stands der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Diese Ziele werden durch die vorliegende Erfindung insbesondere dadurch erreicht, dass bei jedem Taktzyklus des Prozessors ein Zählerregister, beispielsweise ein Zählerregister des Prozessors, inkrementiert wird, dass jeweils bei einem Contextwechsel, anlässlich dessen eine erste Programmeinheit, die auf dem Prozessor ausgeführt wird, blockiert wird und der Prozessor, respektive die Prozessorzeit, einer zweiten Programmeinheit zugeteilt wird, der aktuelle Wert des Zählerregisters als Zeitstempel gespeichert wird, und dass jeweils für einen Programm-Task, der bei einem Contextwechsel blockiert wird, aus dem Zeitstempel des Contextwechsels, bei dem diesem Programm-Task der Prozessor, respektive die Prozessorzeit, zugeteilt wurde, und aus dem Zeitstempel des Contextwechsels, bei dem dieser Programm-Task blockiert wurde, die von diesem Programm-Task verwendete Prozessorzeit bestimmt und gespeichert wird. Der Vorteil die Zeitpunkte, zu denen Programm-Tasks auf dem Prozessor zu laufen beginnen, respektive auf dem Prozessor zu laufen aufhören, gemäss dieser Lösung zu bestimmen besteht insbesondere darin, dass die von Programm-Tasks verwendete Prozessorzeit äusserst genau bestimmt werden kann, nämlich mit einer Zeitauflösung, die der Taktperiode des Taktsignals entspricht, mit dem der Prozessor getaktet wird. Ein weiterer Vorteil dieser Lösung besteht darin, dass sie mit wenig Prozessorinstruktionen realisiert werden kann und somit mit einem geringen zeitlichen Aufwand (overhead) auskommt, so dass es möglich ist, die verwendete Prozessorzeit für sämtliche Programmeinheiten zu bestimmen, die auf dem Prozessor ausgeführt werden, beispielsweise Programm-Tasks, Interrupt-Dienstroutinen und selbst Programmeinheiten des Scheduler-Programms, die bei einem Contextwechsel auf dem Prozessor ausgeführt werden (scheduling overhead). Insbesondere kann gemäss dieser Lösung, wegen des geringen Scheduling Overheads, auch der Programm-Code von Interrupt-Dienstroutinen hinsichtlich der verwendeten Prozessorzeit untersucht werden, wobei die bestimmte, durch die betreffende Interrupt-Dienstroutine verwendete Prozessorzeit dem betreffenden Programm-Task zugeordnet wird, für welchen die Interrupt-Dienstroutine ausgeführt wird, respektive welcher von der Interrupt-Dienstroutine invoziert wird.

Vorzugsweise wird bei einem Contextwechsel überprüft, ob die verwendete Prozessorzeit eines Programm-Tasks, dem der Prozessor, respektive die Prozessorzeit, zugeteilt werden soll, innerhalb eines diesem Programm-Task zugeordneten Prozessorzeit-Budgets liegt, und dass, wenn dies nicht zutrifft, der Prozessor, respektive die Prozessorzeit, einem anderen Programm-Tasks zugeteilt wird, dessen verwendete Prozessorzeit innerhalb dessen zugeordneten Prozessorzeit-Budgets liegt.

### Kurze Beschreibung der Zeichnungen

Nachfolgend wird eine Ausführung der vorliegenden Erfindung anhand eines Beispieles beschrieben. Das Beispiel der Ausführung wird durch folgende beigelegten Figuren illustriert:
Figur 1 zeigt ein Zeitdiagramm, welches schematisch den Zeitverlauf bei Contextwechseln illustriert.
Figur 2 zeigt ein Blockdiagramm, welches schematisch die Speicherung von Zeitstempeln sowie die darauf basierende Bestimmung der verwendeten Prozessorzeit illustriert.
Figur 3 zeigt ein Zeitdiagramm, welches schematisch den Zeitverlauf mehrerer Contextwechsel während mehrerer Timer-Interrupt-Perioden illustriert.

### Wege zur Ausführung der Erfindung

Bei der Ausführung der vorliegenden Erfindung wird von einer bekannten Vorrichtung ausgegangen, die mindestens einen durch einen Taktgenerator getakteten (clocked) Prozessor, für diesen Prozessor zugängliche Speicherelemente, sowie ein in diesen Speicherelementen gespeichertes Betriebssystem umfasst, insbesondere aber nicht ausschliesslich ein Echtzeitbetriebssystem, welches Betriebssystem ein Scheduler-Programm umfasst, insbesondere ein Echtzeit-Scheduler-Programm, das den Prozessor, respektive die Prozessorzeit, jeweils einem von mehreren Programm-Tasks für dessen Ausführung auf dem Prozessor zuteilt.

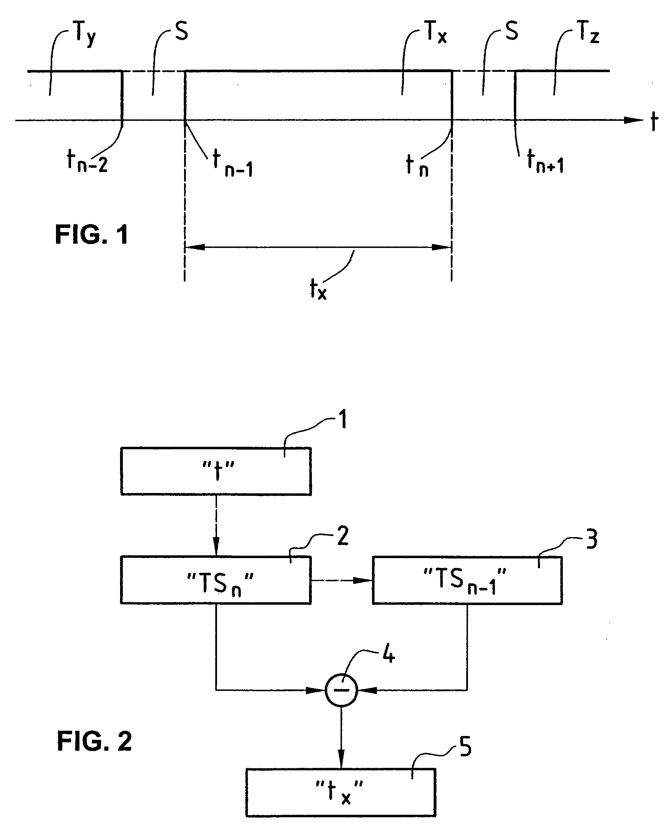

In der Figur 1 wird auf der Zeitachse t schematisch der Zeitverlauf des Contextwechsels vom Programm-Task Ty zum Programm-Task Tx, respektive vom Programm-Task Tx zum Programm-Task Tz dargestellt. Gemäss der Figur 1 wird der Programm-Task Ty bis zum Zeitpunkt tₙ₋₂ auf dem Prozessor ausgeführt. Zum Zeitpunkt tₙ₋₂ erfolgt ein Contextwechsel vom Programm-Task Ty zu einer Programmeinheit S des Scheduler-Programms, wobei der Programm-Task Ty blockiert wird und der Prozessor, respektive die Prozessorzeit, der Programmeinheit S zugeteilt wird. Durch die Programmeinheit S, die auf dem Prozessor ausgeführt wird und die beispielsweise ein Teil der Kernel-Funktionen ist, wird der Contextwechsel zum Programm-Task Tx eingeleitet, wobei der Prozessor, respektive die Prozessorzeit, von der Programmeinheit S des Scheduler-Programms zum Zeitpunkt tₙ₋₁ dem Programm-Task Tx zugeteilt wird, so dass der Programm-Task Tx ab diesem Zeitpunkt auf dem Prozessor ausgeführt wird. Wie in der Figur 1 illustriert wird erfolgt zum Zeitpunkt tₙ ein weiterer Contextwechsel, nämlich vom Programm-Task Tx zu der Programmeinheit S des Scheduler-Programms. Durch die Programmeinheit S wird zum Zeitpunkt tₙ₊₁ der Prozessor, respektive die Prozessorzeit, dem Programm-Task Tz zugeteilt. Der in der Figur 1 dargestellte Doppelpfeil tₓ zeigt die vom Programm-Task Tx vom Zeitpunkt tₙ₋₁ bis zum Zeitpunkt tₙ verwendete Prozessorzeit an, während der der Programm-Task Tx auf dem Prozessor ausgeführt wird (oder anders ausgedrückt: während der der Programm-Task Tx auf dem Prozessor läuft).

In der Figur 2 wird ein Zählerregister 1 dargestellt, dessen Wert "t" bei jedem Taktzyklus des Prozessors inkrementiert wird. Bei einem Contextwechsel von einem ersten Programm-Task, der blockiert wird, zu einem zweiten Programm-Task, dem der Prozessor zugeteilt wird, (beispielsweise in der Figur 1, der Contextwechsel von Tx zu S) wird der aktuelle Wert "t" des Zählerregisters 1 als Zeitstempel "TSₙ" in der Speichereinheit 2 gespeichert, wie in der Figur 2 dargestellt wird. In der Speichereinheit 3 ist der Zeitstempel "TSₙ₋₁" des vorhergehenden Contextwechsels gespeichert, das heisst der Contextwechsel, bei dem der Prozessor dem ersten Programm-Task zugeteilt wurde (beispielsweise in der Figur 1, der Contextwechsel von S zu Tx). Durch eine Subtraktionsoperation 4 (Differenzbildung) wird für den ersten Programm-Task (beispielsweise in der Figur 1, der Programm-Task Tx) aus dem Zeitstempel "TSₙ₋₁" des Contextwechsels, bei dem diesem ersten Programm-Task der Prozessor, respektive die Prozessorzeit, zugeteilt wurde, und aus dem Zeitstempel "TSₙ" des Contextwechsels, bei dem dieser erste Programm-Task blockiert wurde, die von diesem ersten Programm-Task verwendete Prozessorzeit "tₓ" bestimmt und in der Speichereinheit 5 gespeichert.

Der in der Figur 2 schematisch dargestellte Mechanismus zur Erfassung und Speicherung der Zeitstempel "TSₙ", "TSₙ₋₁" und zur darauf basierenden Bestimmung der verwendeten Prozessorzeit "tₓ" eines Programm-Tasks Tx kann hardwaremässig und/oder softwaremässig ausgeführt werden.

Im Beispiel einer hardwaremässigen Ausführung sind die Speichereinheiten 1, 2, 3 und 5 Speicherregister, die untereinander so verbunden sind, dass die darin gespeicherten Werte, beispielsweise in Synchronisation mit der Taktfrequenz des Prozessors, in mehreren Zyklen stufenweise durchgetaktet werden können. Dabei wird beispielsweise in einem ersten Zyklus der Inhalt "t" des Zählerregister 1, zum Beispiel auf Grund eines Interrupts, als Zeitstempel "TSₙ" in die Speichereinheit 2 kopiert und der vorgängige Inhalt "TSₙ₋₁" der Speichereinheit 2 in die Speichereinheit 3 kopiert. Die Speichereinheiten 2 und/oder 3 sind vorzugsweise in den Prozessor integrierte Register oder dynamische Speicherzellen, die Speichereinheiten 2 und/oder 3 können sich aber auch ausserhalb des Prozessors befinden. In einem weiteren Zyklus werden die in den Speichereinheiten 2 und 3 gespeicherten Zeitstempel "TSₙ" und "TSₙ₋₁" einer Subtraktionseinheit oder einer arithmetischen Einheit (Arithmetic Logic Unit, ALU) zugeführt und das Resultat "tₓ" der Subtraktionsoperation 4 in einem nachfolgenden Zyklus in der Speichereinheit 5 gespeichert. Die hardwaremässige Lösung kann teilweise oder vollständig in den Prozessor integriert werden, die Speicherung eines aktuellen Werts "t" des Zählerregisters 1 als Zeitstempel und/oder die Bestimmung der verwendeten Prozessorzeit "tₓ" kann beispielsweise durch eine für diesen Zweck reservierte Prozessorinstruktion eingeleitet werden. In einer Ausführungsvariante kann die hardwaremässige Lösung, einschliesslich des Zählerregisters 1 und der Speichereinheiten 2, 3, 5 sowie einer Schaltung zur Ausführung der Subtraktionsoperation 4, als diskrete oder integrierte Schaltung ausserhalb des Prozessors implementiert werden, die mit der gleichen Taktrate wie der Prozessor getaktet wird.

Im Beispiel einer softwaremässigen Ausführung wird der in der Figur 2 dargestellte Mechanismus mittels Prozessorinstruktionen der Programmeinheit S des Scheduler-Programms auf dem Prozessor ausgeführt. Dabei wird mittels Prozessorinstruktionen der aktuelle Wert "t" des Zählerregisters 1 als Zeitstempel "TSₙ" in die Speichereinheit 2 kopiert, die verwendete Prozessorzeit "tₓ" durch Subtraktion des Zeitstempels "TSₙ₋₁" in der Speichereinheit 3 vom Zeitstempel "TSₙ" in der Speichereinheit 2 bestimmt, und der Zeitstempel "TSₙ" in der Speichereinheit 2 in die Speichereinheit 3 kopiert. Die Speichereinheiten 2, 3 und 5 sind beispielsweise in den Prozessor integrierte Register oder andere dynamisch schreib- und lesbare Speicherzellen, die sich jeweils innerhalb oder ausserhalb des Prozessors befinden können.

Mittels weiterer Programmschritte der Programmeinheit S des Scheduler-Programms wird die bestimmte verwendete Prozessorzeit "tₓ" direkt dem laufenden Wert der insgesamt verwendeten Prozessorzeit des betreffenden Programm-Tasks hinzuaddiert.

Der Fachmann wird verstehen, dass im Sinne der vorliegenden Erfindung auch weitere hardwaremässige, softwaremässige und/oder kombinierte soft- und hardwaremässige Varianten zur Ausführung des in der Figur 2 schematisch illustrierten Mechanismus möglich sind.

In weiteren Programmschritten der Programmeinheit S des Scheduler-Programms wird bei einem Contextwechsel überprüft, ob die verwendete Prozessorzeit eines Programm-Tasks, dem der Prozessor, respektive die Prozessorzeit, als nächstes zugeteilt werden soll, innerhalb eines diesem Programm-Task zugeordneten Prozessorzeit-Budgets liegt. Falls dies nicht zutrifft, wird der Prozessor, respektive die Prozessorzeit, durch weitere Programmschritte der Programmeinheit S einem anderen Programm-Task zugeteilt, dessen insgesamt verwendete Prozessorzeit innerhalb dessen zugeordneten Prozessorzeit-Budgets liegt. Das Prozessorzeit-Budget eines Programm-Tasks wird beispielsweise als maximaler Anteil des betreffenden Programm-Tasks an der Prozessorzeit über eine bestimmte Zeitperiode definiert, beispielsweise 5 % der Prozessorzeit während der Periodendauer von 10 Timer-Interrupts.

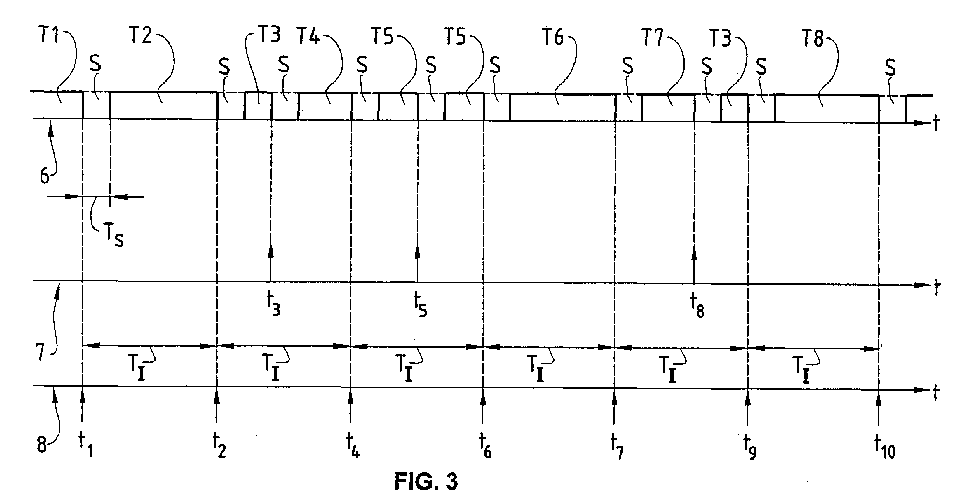

In der Figur 3 wird ein Beispiel des Zeitverlaufs mehrerer Contextwechsel während mehrerer Timer-Interrupt-Perioden T1 illustriert, wobei die Prozessorzeiten der einzelnen Programm-Tasks nur schematisch dargestellt sind und nicht die realen Zeitverhältnisse einzelner Programm-Tasks zueinander wiedergegeben werden, beispielsweise das Verhältnis der Zeitdauer der Prozessorzeit der Programmeinheiten S des Scheduler-Programms zu der Zeitdauer der Prozessorzeit einzelner Programm-Tasks T1 bis T8 oder zu der Periodendauer T_{I} der Timer-Interrupts. Auf der mit 6 bezeichneten Zeitachse wird der Zeitverlauf der Contextwechsel zwischen den Programm-Tasks T1 bis T8 und der Programmeinheit S des Scheduler-Programms dargestellt. Auf der mit 7 bezeichneten Zeitachse wird der Zeitverlauf von Hardware-Interrupts dargestellt, die jeweils einen sogenannten preempting Contextwechsel einleiten. Auf der mit 8 bezeichneten Zeitachse wird der zeitliche Verlauf der Timer-Interrupts dargestellt, mittels welchen jeweils periodisch (Periodendauer T_{I}) ein Contextwechsel eingeleitet wird.

Wie auf der Zeitachse 6 dargestellt ist, wird zum Zeitpunkt t₁ durch einen Timer-Interrupt ein Contextwechsel eingeleitet, anlässlich dessen der auf dem Prozessor laufende Programm-Task T1 blockiert wird und der Prozessor, respektive die Prozessorzeit, der Programmeinheit S des Scheduler-Programms zugeteilt wird. Wie oben beschrieben wurde, wird jeweils durch die Programmeinheit S des Scheduler-Programms, respektive durch Hardwaremechanismen, die durch Prozessorinstruktionen der Programmeinheit S eingeleitet werden, der Zeitstempel des Contextwechsels (hier von T1 zu S) erfasst, die verwendete Prozessorzeit des blockierten Programm-Tasks (hier T1) bestimmt und der insgesamt verwendeten Prozessorzeit dieses blockierten Programm-Tasks hinzuaddiert, die für den Vergleich mit dem Prozessorzeit-Budget relevant ist, und der Contextwechsel zum nächstfolgenden Programm-Task mit verbleibendem Prozessorzeit-Budget (hier T2) eingeleitet, wobei wiederum ein Zeitstempel erfasst wird. Durch die Erfassung der Zeitstempel bei jedem Contextwechsel kann auch die durch die Programmeinheit S des Scheduler-Programms verwendete Prozessorzeit T_{S} bestimmt werden, so dass der insgesamte zeitliche Aufwand für die Verwaltung der Prozessorzeit durch das Scheduling-Programm, der sogenannte Scheduling Overhead, bestimmt werden kann.

Zum Zeitpunkt t₂ wird ein weiterer Contextwechsel durch einen Timer-Interrupt eingeleitet.

Wie auf der Zeitachse 7 dargestellt ist, erfolgt zum Zeitpunkt t₃ ein Hardware-Interrupt, mittels dessen ein Contextwechsel zum preempting Programm-Task T4 eingeleitet wird. Auf Grund dieses Hardware-Interrupts wird der Programm-Task T3 blockiert und der Programmeinheit S der Prozessor zugeteilt, welche dann die oben beschriebenen Schritte ausführt, wobei vor der Zuteilung des Prozessors, respektive der Prozessorzeit, an den Programm-Task T4 insbesondere überprüft wird, ob die vom Programm-Task T4 bis anhin insgesamt (in der für die Bestimmung des Prozessorzeit-Budgets relevanten Zeitperiode) verwendete Prozessorzeit innerhalb des diesem Programm-Task T4 zugeordneten Prozessorzeit-Budgets liegt.

Zum Zeitpunkt t₄ wird ein weiterer Contextwechsel durch einen Timer-Interrupt eingeleitet.

Zum Zeitpunkt t₅ erfolgt ein Hardware-Interrupt, mittels dessen ein Contextwechsel zu einem preempting Programm-Task eingeleitet wird, dessen verwendete Prozessorzeit nicht innerhalb des diesem Programm-Task zugeordneten Prozessorzeit-Budgets liegt, so dass die Programmeinheit S diesem Programm-Task den Prozessor, respektive die Prozessorzeit, nicht zuteilt, sondern den Prozessor wieder dem Programm-Task T5 zuteilt, der zum Zeitpunkt t₅ blockiert wurde und dessen verwendete Prozessorzeit innerhalb seines Prozessorzeit-Budgets liegt.

Zu den Zeitpunkten t₆, t₇, t₉, und t₁₀ werden weitere Contextwechsel durch Timer-Interrupts eingeleitet.

Zum Zeitpunkt t₈ erfolgt ein weiterer Hardware-Interrupt, mittels dessen ein Contextwechsel zum preempting Programm-Task T3 eingeleitet wird, dessen verwendete Prozessorzeit innerhalb seines Prozessorzeit-Budgets liegt.

Ein erfindungsgemässes Computerprogrammprodukt umfasst ein computerlesbares Medium mit darin enthaltenen Computerprogrammcodemitteln zur Steuerung eines Prozessors so dass der Prozessor die Schritte das erfindungsgemässen Verfahrens ausführt.

### Bezugszeichenliste

- 1: Zählerregister
- 2, 3: Speichereinheiten mit Zeitstempelwerten
- 4: Subtraktionsoperation
- 5: Speichereinheit mit bestimmter verwendeter Prozessorzeit
- 6: Zeitachse mit Contextwechseln zwischen Programm-Tasks
- 7: Zeitachse mit Hardware-Interrupts
- 8: Zeitachse mit Timer-Interrupts
- S: Programmeinheit des Scheduler-Programms
- T1-T8: Programm-Tasks
- t₁-t₁₀: Zeitpunkte
- T_{I}: Periodendauer des Timer-Interrupts
- tₙ₋₂-tₙ₊₁: Zeitpunkte
- tₓ: Verwendete Prozessorzeit des Programm-Tasks Tx
- Tₛ: Verwendete Prozessorzeit der Programmeinheit des Scheduler-Programms (scheduling overhead)
- Tx-Tz: Programm-Tasks

## Patentansprüche

1. Verfahren zur Verwaltung der Prozessorzeit, die jeweils einem von mehreren Programm-Tasks (Tx) für dessen Ausführung auf einem Prozessor zugeteilt wird, **dadurch gekennzeichnet,**
**dass** bei jedem Taktzyklus des Prozessors ein Zählerregister (1) inkrementiert wird,
**dass** jeweils bei einem Contextwechsel, anlässlich dessen eine erste Programmeinheit (Tx), die auf dem Prozessor ausgeführt wird, blockiert wird und der Prozessor, respektive die Prozessorzeit, einer zweiten Programmeinheit (S) zugeteilt wird, ein aktueller Wert des Zählerregisters (1) als Zeitstempel ("TSₙ") gespeichert wird, und
**dass** jeweils für einen Programm-Task (Tx), der bei einem Contextwechsel blockiert wird, aus dem Zeitstempel ("TSₙ₋₁") des Contextwechsels, bei dem diesem Programm-Task (Tx) der Prozessor, respektive die Prozessorzeit, zugeteilt wurde, und aus dem Zeitstempel ("TSₙ") des Contextwechsels, bei dem dieser Programm-Task (Tx) blockiert wurde, die von diesem Programm-Task (Tx) verwendete Prozessorzeit (tₓ) bestimmt und gespeichert wird.

2. Verfahren gemäss Anspruch 1, **dadurch gekennzeichnet, dass** bei einem Contextwechsel überprüft wird, ob die verwendete Prozessorzeit eines Programm-Tasks, dem der Prozessor, respektive die Prozessorzeit, zugeteilt werden soll, innerhalb eines diesem Programm-Task zugeordneten Prozessorzeit-Budgets liegt, und dass, wenn dies nicht zutrifft, der Prozessor, respektive die Prozessorzeit, einem anderen Programm-Task zugeteilt wird, dessen verwendete Prozessorzeit innerhalb dessen zugeordneten Prozessorzeit-Budgets liegt.

3. Verfahren gemäss einem der Ansprüche 1 oder 2, **dadurch gekennzeichnet, dass** die genannten Programmeinheiten Programm-Tasks, Interrupt-Dienstroutinen und Programmeinheiten eines Scheduler-Programms umfassen.

4. Verfahren gemäss einem der Ansprüche 1 bis 3, **dadurch gekennzeichnet, dass** die Speicherung eines aktuellen Werts des Zählerregisters (1) als Zeitstempel und/oder die Bestimmung der verwendeten Prozessorzeit durch eine für diesen Zweck reservierte Prozessorinstruktion eingeleitet und mittels integrierter Hardwareelemente des Prozessors durchgeführt werden.

5. Verfahren gemäss einem der Ansprüche 1 bis 3, **dadurch gekennzeichnet, dass** die Speicherung eines aktuellen Werts des Zählerregisters (1) als Zeitstempel und/oder die Bestimmung der verwendeten Prozessorzeit durch ein aus mehreren Prozessorinstruktionen bestehendes Programm auf dem Prozessor ausgeführt wird.

6. Vorrichtung, die mindestens einen getakteten Prozessor, für diesen Prozessor zugängliche Speicherelemente, sowie ein in diesen Speicherelementen gespeichertes Betriebssystem umfasst, welches Betriebssystem ein Scheduler-Programm umfasst, das jeweils einem von mehreren Programm-Tasks für dessen Ausführung den Prozessor, respektive die Prozessorzeit, zuteilt, **dadurch gekennzeichnet,**
**dass** die Vorrichtung ein Zählerregister (1) umfasst, das bei jedem Taktzyklus des Prozessors inkrementiert wird,
**dass** die Vorrichtung erste Mittel umfasst, um jeweils bei einem Contextwechsel, anlässlich dessen eine erste Programmeinheit (Tx), die auf dem Prozessor ausgeführt wird, blockiert wird und der Prozessor, respektive die Prozessorzeit, einer zweiten Programmeinheit (S) zugeteilt wird, einen aktuellen Wert des Zählerregisters (1) als Zeitstempel ("TSₙ") zu speichern, und
**dass** die Vorrichtung zweite Mittel umfasst, um jeweils für einen Programm-Task (Tx), der bei einem Contextwechsel blockiert wird, aus dem Zeitstempel ("TSₙ₋₁") des Contextwechsels, bei dem diesem Programm-Task (Tx) der Prozessor, respektive die Prozessorzeit, zugeteilt wurde, und aus dem Zeitstempel ("TSₙ") des Contextwechsels, bei dem dieser Programm-Task (Tx) blockiert wurde, die von diesem Programm-Task (Tx) verwendete Prozessorzeit (tₓ) zu bestimmen und zu speichern.

7. Vorrichtung gemäss Anspruch 6, **dadurch gekennzeichnet, dass** das Scheduler-Programm so eingerichtet ist, dass es bei einem Contextwechsel überprüft, ob die verwendete Prozessorzeit eines Programm-Tasks, dem der Prozessor, respektive die Prozessorzeit, zugeteilt werden soll, innerhalb eines diesem Programm-Task zugeordneten Prozessorzeit-Budgets liegt, und dass es, wenn dies nicht zutrifft, den Prozessor, respektive die Prozessorzeit, einem anderen Programm-Tasks zuteilt, dessen verwendete Prozessorzeit innerhalb dessen zugeordneten Prozessorzeit-Budgets liegt.

8. Vorrichtung gemäss einem der Ansprüche 6 oder 7, **dadurch gekennzeichnet, dass** die genannten Programmeinheiten Programm-Tasks, Interrupt-Dienstroutinen und Programmeinheiten des Scheduler-Programms umfassen.

9. Vorrichtung gemäss einem der Ansprüche 6 bis 8, **dadurch gekennzeichnet, dass** die Vorrichtung in den Prozessor integrierte Hardwareelemente umfasst, mittels welcher die Speicherung eines aktuellen Werts des Zählerregisters (1) als Zeitstempel und/oder die Bestimmung der verwendeten Prozessorzeit, auf Grund einer Einleitung mittels einer für diesen Zweck reservierten Prozessorinstruktion, ausführbar sind.

10. Vorrichtung gemäss einem der Ansprüche 6 bis 8, **dadurch gekennzeichnet, dass** das Scheduler-Programm eine aus mehreren Prozessorinstruktionen bestehende Programmeinheit umfasst, welche den Prozessor so steuert, dass er den aktuellen Wert des Zählerregisters (1) als Zeitstempel speichert und/oder die verwendete Prozessorzeit bestimmt.

11. Computerprogrammprodukt umfassend: ein computerlesbares Medium mit darin enthaltenen Computerprogrammcodemitteln zur Steuerung eines Prozessors einer Vorrichtung gemäss einem der Ansprüche 6 bis 10, so dass der Prozessor sämtliche Schritte des Verfahrens gemäss einem der Ansprüche 1 oder 2 ausführt.
